(19) Europäisches Patentamt
European Patent Office
Office européen des brevets

(11) **EP 2 696 608 B1**

(12) **EUROPEAN PATENT SPECIFICATION**

(45) Date of publication and mention
of the grant of the patent:
**05.02.2020   Bulletin 2020/06**

(51) Int Cl.:
*H04L 29/08* (2006.01)          *H04L 29/06* (2006.01)
*H04W 4/21* (2018.01)

(21) Application number: **13003886.2**

(22) Date of filing: **05.08.2013**

(54) **Avatar process for mobile devices**

Avatar-Verfahren für mobile Vorrichtungen

Processus d'avatar pour dispositifs mobiles

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.08.2012   IL 22131812**

(43) Date of publication of application:
**12.02.2014   Bulletin 2014/07**

(73) Proprietor: **Deutsche Telekom AG
53113 Bonn (DE)**

(72) Inventors:
• **Dolev, Shlomi
  84965 Omer (IL)**

• **Kopeetsky, Marina
  Ashdod (IL)**
• **Mimran, Dudu
  Tel-Aviv (IL)**

(74) Representative: **Flaccus, Rolf-Dieter
Flaccus · Müller-Wolff
Patentanwälte
Bussardweg 10
50389 Wesseling (DE)**

(56) References cited:
**US-A1- 2011 277 028     US-A1- 2012 072 481**

## Description

## Field of the Invention

The invention is from the fields of communication networks and cloud computing. Specifically the invention is related to providing automatic operations on behalf of users even when the users are unavailable, including automatic autonomic actions by representing agents (e.g. answering machine) and backup services.

## Background of the Invention

The method of the invention can be used with mobile networks and mobile devices, e.g. cellular phones. These devices are typically characterized by limited resources of battery, memory, and processing power. Despite the limitations users are increasingly requesting services that require larger and larger amounts of these resources. An additional technical problem is maintaining the connection between the user's device and the services as the user changes location and even when the user's device is turned off. Another concern is the level of security with which messages can be transmitted over the network.

A large amount of effort and resources have been and are being expended in providing efficient methods of solving these problems. Many different proposals for implementing location information systems, methods and systems for providing location based presence status and enhancing location privacy management in the mobile devices, event notification services have been proposed for implementation. Some of the recent proposals that present a representative sampling of the state of the art are:

U.S. Patent Application Serial No.12/007,947 proposes a method for reducing the number of messages required in networks in which both location and presence services are deployed. Information determined in a location service scheme is utilized to provide a presence service as well. A location server requests mobile subscriber information from a Core Network Node that can be used in determining the location of the mobile subscriber. A single message aggregates retrieval of information for both location and presence services.

U.S. Patent Application Serial No. 12/498,294 proposes a location information system and method for performing notification based upon location in the mobile networks.

U.S. Patent Application Serial No. 11/793,685, 2006 relates to the management of a mobile communication system which includes a mobile communications network and a battery-powered mobile communication terminal. The proposed method includes receiving, at a mobile communication network apparatus subsystem, a notification of a low battery charge condition from the battery-powered mobile communication terminal, and having the mobile communication network apparatus subsystem inform at least one other network user, based on the received notification.

A location architecture for large scale mobile networks, based on receipt of a connection event message including information, identifying a wireless node, is proposed in U.S. Patent Application Serial No. 11/558,407. The identifying information comprises a wireless node identifier and an area code associated with the wireless node.

A system and method for provisioning a primary mobile device from a secondary mobile device, including storing at the secondary mobile device data for the primary mobile device, are proposed in U.S. Patent Application Serial No. 11/457,546. The backed-up provisioning data includes information used by the primary mobile device for communicating over a wireless network. The invention also proposes establishing a direct wireless communication link between the secondary mobile device and the primary mobile device, sending the provisioning data over the communication link from the secondary mobile device to the primary mobile device, and storing the provisioning data at the primary mobile device.

U.S. Patent Application Serial No. 11/355,846 proposes backup and restoration of user data for a mobile telephone. A mobile telephone includes an application processor, an internal memory, an external memory card, a backup software module and a restore software module. User data is stored in the internal memory. The backup software module detects changes in the user data, resulting in modified user data. The modified user data is stored on the external memory card. When the user data is erased from the internal drive or the wireless device needs to be reset, the restore software module reads the modified user data from the external memory card and writes the modified user data back into the internal memory. In this fashion, any modified user data is not lost when the wireless device is reset.

An apparatus and method for processing a data backup service of a mobile terminal are proposed in U.S. Patent Application Serial No. 10/926,097. The apparatus and method backs-up data stored in a mobile terminal in a backup server over a wireless Internet. The backup server is capable of backing-up resource information of the mobile terminal.

A method of automatically authenticating clients on a computer system network is proposed in U.S. Patent Application Serial No. 11/347,124. The method enables clients on the network to be automatically logged in and added to a backup database and assigned for backup. The method employs a public key/private key encryption system in which clients have a public key and the backup server has a private key. The backup server interrogates new clients to determine client status and whether the client supports the public key/private key certificate. Moreover, the method enables backup software and public keys to be automatically installed on the client's device.

US 2011/0277028 discloses a method for virtually extending the functionality of a network device to a server. An association is stored between the network device and a user or a group for the network device. A network address for a virtual device, which virtually represents functionality of the network device, is assigned based on a determination as to whether the network device and the user or the group for the network device correspond to a local network or to a disparate network. Functionality of the network device is accessed via the virtual device, using the assigned network address for the virtual device.

US 2010/0072481 discloses a system and method for transferring application-specific functionality from a mobile handset to a wireless network associated with the mobile handset. A network component of the system communicates with a virtual copy of the mobile application on behalf of the handset while the handset is not actively using the application and performs any necessary application execution on behalf of the handset. The network component transfers execution back to the handset when the handset resumes active use of the mobile application.

Products that address the issues discussed above are in commercial use. For example, Amazon.com has uses the Amazon Silk browser for use with its Kindle product [http://amazonsilk.wordpress.com/2011/09/28/introducing-amazon-silk]. AmazonSilk performs smart processing at the cloud of mobile network supporting a temporary process, which is created for the current user's task, and deleted (killed) after the task is completed.

It is a purpose of the present invention to provide a user of a cellular network with an application that saves the processor power of the user's mobile device by providing communication (send/receive) operations, backup services, performing useful processing on behalf of a user when its battery power is low or when the mobile device is switched off.

Further purposes and advantages of this invention will appear as the description proceeds.

## Summary of the Invention

In a first aspect the invention is an application process provided as a service to a user of a communication network by the operators of the network. The application process is associated with a specific user and performs for the user's device the computationally and storage expensive services of monitoring, processing, backup, and data transmission. These services are performed using processor and memory resources located at a base station in the network closest to the current location of the user.

The application process is configured to continue to provide these services at a base station in a different mobile network when the user passes to a region of a different network, by taking the location closest to the current position of the user in the different mobile network, and continues to represent the user in his/her home network by opening a connection to the user's home network to receive messages and perform operations on behalf of the user, or re-route messages sent to a second user when the user moves out of the home network.

The application process of the invention can be used in communication networks operating using any technology, e.g. cellular telephone, internet, intranet, Wi-Fi, Bluetooth, RFID, wired, and others.

In embodiments of the invention in which the communication network is a cellular network, the application process can be located at the cellular network base station closest to the current location of the user.

In embodiments of the invention communication between a device and its associated application process is efficiently and securely performed based on coding and encryption techniques.

In embodiments of the invention communication between a device and its associated application process is carried out by means of a dynamic dictionary of rules that is shared between the mobile device and its associated application. The rules in the dynamic dictionary of rules can be defined by the user.

In embodiments of the invention the rules in the dynamic dictionary of rules are dependent on whether the user is on-line or off-line, so that even when the user is non-active his/her Avatars are active on his/her behalf.

In embodiments of the invention the application process of a user or the application processes of several users are adapted to coordinate their actions automatically and autonomously.

In embodiments of the invention the user's device is only a terminal comprised essentially of a keyboard and a display screen and all processing is done by the application process of the invention, which receives keystrokes from the device and updates the visual information on the screen.

In a second aspect the invention is a system comprising a communication network user's device and one or more associated application processes of the first aspect.

All the above and other characteristics and advantages of the invention will be further understood through the following illustrative and non-limitative description of embodiments thereof, with reference to the appended drawings.

## Brief Description of the Drawings

- Fig. 1 schematically shows the Avatar process of the invention when mobile users are located in their home mobile network; and
- Fig. 2 schematically shows the Avatar process of the invention when a mobile user changes location.

## Detailed Description of Embodiments of the Invention

The invention is a service provided to a user by the operators of a communication network. The service of the invention, known herein as Avatar, comprises an application process that is associated with a specific user. The Avatar application process permanently represents the user, and accompanies the user wherever he/she is located. Avatar acts on behalf of a user of the network performing the functions of monitoring, processing (e.g. encryption/decryption services), performing backup, and data transmission.

Herein the invention is described in terms of cellular telephone networks but it can also be used in conjunction with any other type of communication network, e.g. internet, private intranet networks of an organization or business, Wi-Fi, Bluetooth, RFID, or even wired networks.

Typically, the users of a mobile network are characterized by restricted processor power and memory space, and therefore they cannot perform huge communication and processing tasks. One of the purposes of the Avatar application process is to save the user's processor power by providing communication (send/receive) operations, backup services, performing useful processing on behalf of a user when its battery power is low or when the mobile device is switched off.

The Avatar process is located either at the network close to the current location of the user or at the cloud of the user's cellular service provider. Since the process runs in the computationally non-constraint environment, it can provide (on-line) computationally and storage expensive services for a user's mobile device that has restricted computational resources, memory space and energy. The communication, i.e. the exchange of messages, between a mobile device and its Avatar is efficiently and securely performed based on coding and encryption techniques. As a result, the device energy (power) level, the message transmission time, or the number of signals sent by the mobile device is efficiently reduced, consequently reducing the energy (power) consumption of the device.

To illustrate the invention assume that a mobile network $MNk$ consists of n mobile devices/users $M_1,...,M_n$. During the initialization stage each mobile device, say $M_i$ is associated with a process $Avatar_i$, which persistently accompanies $M_i$ when $Mi$ changes its location, i.e. when $M_i$ passes to the region of the base station associated with the another mobile network or when it is switched off. The process $Avatar_i$ runs separately on the cloud of $M_i$'s cellular home network or on the base station $BS_k$ associated with $M_i$'s home network $MNk$. During the initialization stage the mobile client initiates a (TCP) connection with its $Avatar_i$ process. This connection may be permanent or temporary. During the connection establishment stage, the corresponding resources, i.e. processor and memory, are allocated for the $Avatar_i$ realization.

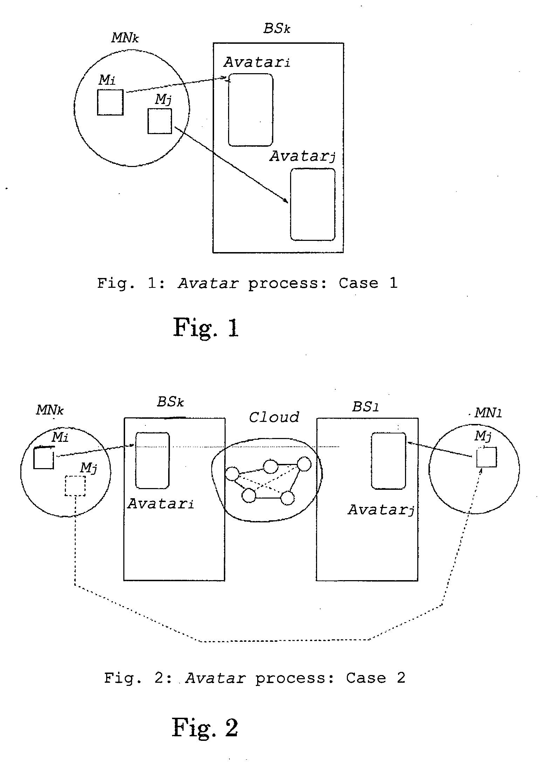

Whenever $Mi$ is located in the radius of its mobile network $MNk$ and is associated with its base station $BS_k$, the $Avatar_i$'s functionality is as follows (see Fig. 1):

1. $Avatar_i$ provides replicating (backup) services by copying and updating the state of $M_i$ regarding $M_i$'s current calls and running applications. In addition, $Avatar_i$ copies and backs up data that is stored in $M_i$'s memory.

2. $Avatar_i$ saves the battery (or power) of the mobile device by providing communication activity and other useful processing and storage services on behalf of $M_i$ even when $M_i$ is switched off.

3. Communication between a user $M_i$ and its associated $Avatar_i$ process is carried out by means of a dynamic dictionary of messages (rules) $D$, which is shared between $M_i$ and $Avatar_i$. The dictionary $D$ is updated either at constant time intervals or by a mobile user upon release of new rules. The messages (or the list of rules) $D$ may include, for example, a request for initiating new calls, Skype or SIP sessions, etc. The time and energy saving methods of the invention are also based on direct communication between a device and the network, using dynamic programming techniques, guessing games, effective coding, or other approaches. In such a way expensive energy is saved for the mobile devices.

4. $Avatar_i$ saves communication overhead of the associated mobile device by carrying out large communication tasks, e.g. multicasting, on behalf of the mobile user $Mi$; thereby efficiently reducing device energy (power) usage by minimizing the number of signals sent by the mobile device.

5. $Avatar_i$ acts as intelligent "answering machine". When the device is turned off, its last state is known to the associated Avatar process allowing the Avatar to perform mimicking of the user's behavior and docking updates upon user's recovery.

6. Secure data transfer between a user $M_i$ and the associated process $Avatar_i$ may be provided by the securing connection (by means of the Transport Layer Security (TLS) service and the Secure Socket Layer (SSL) protocol (see [E. Rescorla, "SSL and TLS: Designing and Building Secure Systems", pages 65-178, Addison-Wesley ed., 2006] for details), by encryption of the messages, or by another method.

7. The Avatar service is provided to the user's device by computer clouds of the mobile network, by base stations (4G), or by a machine owned by the device user located in the user's home or business.

8. It should be noted that a number of $Avatar_i^j$ , j = 1 .. b, processes may be associated with a mobile device $M_i$. Each $Avatar_i^j$ performs a distinct functionality including the $Avatar_i^j$ process performing backup of the $Avatar_i^h$ process. One user/device may have several specialized Avatars located conveniently where their activity is optimized, e.g., a stock broker Avatar could be located near Wall-Street and a weather reporting Avatar near the closest meteorology station.

When $M_j$ changes its location and passes to a region of any other mobile network, say $MN_l$, the $Avatar_j$ process has the following additional responsibilities (see Fig. 2):

1. $Avatar_j$ takes the location closest to the current position of $M_j$. It may be located at the base station of the visited (new) mobile network $MN_l$, or at any other large wire network with large resources that is close to $MN_l$.

2. $Avatarj$ represents a user $M_j$ at its home mobile network $MN_k$. $Avatar_j$ opens the connection with the home agent of $MNk$, receives the messages and performs operations on behalf of $Mj$, or re-routes messages sent to $M_i$ when $M_i$ moves out of $MNk$.

3. $Avatarj$ performs replication services, sends reply messages or talks on behalf of $M_j$ when $M_j$ is switched off, or visits another network.

4. The intelligent "answering machine" function of the Avatar process can also be implemented when a user changes his location. When a device is in its home network, its last state is known to the associated Avatar process. When the device moves out of its home network to another network, the Avatar performs mimicking of the user's behavior and performs docking of updates upon the return of the user to its home network.

5. Avatar performs smart security mechanisms for a user by storing a secret user's key and sends it to the user upon his/her request. After that when the user applies the key to secret data, Avatar updates the old key. Hence, the secret key is not stored on the mobile device, but is stored in the more secure environment at the Avatar's current location. Moreover, the mobile user and the associated Avatar share a certain secret. The secret sharing may be performed, for example, by means of the method of Feige, et al. [U. Feige, A. Fiat, A. Shamir, "Zero-Knowledge Proofs of Identity", Journal of Cryptology, Volume 1, Number 2, pages 77-94, Springer New York, 1988]. As a result, a situation in which either the device or its Avatar is compromised by an adversary is also treated in this invention. It is noted that this method as well as the method described above of providing security applies to both the case of Fig. 1 (while a mobile user stays in his home network), and of Fig. 2 (while a mobile user visits other network).

The advantages which the current invention offers to a mobile device user are as follows:

1. A mobile user, who is characterized by restricted resources, is completely represented by an Avatar process. This process is platform independent and runs in a computationally unbounded environment. In this way large processing and communication resources are available to a user. In some instances the user's device may be only a terminal comprised essentially of a keyboard and a display screen. All processing will be done by the Avatar associated with the device, which receives keystrokes from the device and updates the visual information on the screen.

2. The energy (battery power) of a mobile device is efficiently conserved because the corresponding Avatar supports the user's communication and computational activities.

3. Communication between a mobile user and its Avatar process is efficiently implemented regarding time and energy consumptions.

4. Avatar acts according to predefined rules that can be dependent on whether the user's mobile device is on-line or off-line, so that even if the device is switched off or its battery is low, the associated Avatar process completely represents the user by providing all operations on behalf of the user.

5. When a mobile user visits another mobile network, the associated Avatar accompanies the user and completely represents him/her in his/her home mobile network. The Avatar receives calls and messages sent to the user's address in the home mobile network and re-routes them to the user in the other mobile network.

6. The messages transmitted between a mobile user and its Avatar are efficiently secured by means of securing the mutual TCP connection, or by encryption of the messages.

7. The Avatar process may be viewed as a sophisticated mail (or message) box that can simulate a user's replies while the user's device is switched off or is away from its home network.

8. Avatars of the same user or of several users may coordinate their actions automatically and autonomously, e.g., coordinating meeting time-tables.

The main differences between the AmazonSilk product discussed herein above and the Avatar process of the invention are:

1. AmazonSilk browser supports temporary process, created for the current user's task, and deleted (killed) after the task is completed. Avatar runs permanently, and represents a user at any user's state and location.
2. AmazonSilk performs smart processing at the cloud of mobile network. Avatar may have any location (cloud, base station, user's home network, etc.).

Although embodiments of the invention have been described by way of illustration, it will be understood that the invention may be carried out with many variations, modifications, and adaptations, without exceeding the scope of the claims.

## Claims

1. An application process (Avatar$_j$) provided as a service to a user (M$_j$) of a communication network (MN$_k$) by the operators of the network, the application process (Avatar$_j$) is associated with a specific user (M$_j$) and performs for the user's device the computationally and storage expensive services of monitoring, processing, backup, and data transmission; wherein these services are performed using processor and memory resources located at a base station (BS$_k$) in the network (MN$_k$) closest to the current location of the user (M$_j$);
characterized in that the application process (Avatar$_j$) is configured to continue to provide these services at a base station (BS$_1$) in a different mobile network (MN$_l$) when the user (M$_j$) passes to a region of the different network (MN$_l$) by taking the location closest to the current position of the user (M$_j$) in the different mobile network (MN$_l$) and continues to represent the user (M$_j$) in his/her home network (MN$_k$) by opening a connection to the user's (M$_j$) home network (MN$_k$) to receive messages and perform operations on behalf of the user (M$_j$), or re-route messages sent to a second user (M$_i$) when the user (M$_j$) moves out of his/her home network (MN$_k$).

2. The application process (Avatar$_j$) of claim 1, wherein the communication network operates using one of the following technologies:

   a. cellular telephone;
   b. internet;
   c. intranet;
   d. Wi-Fi;

   e. Bluetooth;
   f. RFID; and
   g. wired.

3. The application process (Avatar$_j$) of claim 1, wherein the communication network (MN$_k$) is a cellular network and the application process is located at the cellular network base station (BS$_k$) closest to the current location of the user (M$_j$).

4. The application process (Avatar$_j$) of claim 1, wherein communication between a device and its associated application process (Avatar$_j$) is efficiently and securely performed based on coding and encryption techniques.

5. The application process (Avatar$_j$) of claim 1, wherein communication between a device and its associated application process (Avatar$_j$) is carried out by means of a dynamic dictionary of rules that is shared between said mobile device and its associated application (Avatar$_j$).

6. The application process (Avatar$_j$) of claim 5, wherein the rules in the dynamic dictionary of rules are defined by the user (M$_j$).

7. The application process (Avatar$_j$) of claim 5, wherein the rules in the dynamic dictionary of rules are dependent on whether the user (M$_j$) is on-line or off-line so that, even when the user (M$_j$) is non-active, his/her Avatars (Avatar$_j$) are active on his/her behalf.

8. The application process (Avatar$_j$) of claim 1, wherein the application process (Avatar$_j$) of a user (M$_j$) or the application processes (Avatar$_j$, (Avatar$_j$) of several users (M$_j$, M$_i$) are adapted to coordinate their actions automatically and autonomously.

9. The application process (Avatar$_j$) of claim 1, wherein the user's (M$_j$) device is only a terminal comprised essentially of a keyboard and a display screen, wherein all processing is done by said application process (Avatar$_j$), which receives keystrokes from said device and updates the visual information on said screen.

10. A system comprising a communication network user's (M$_j$) device and one or more associated application processes (Avatar$_j$) of claim 1.

## Patentansprüche

1. Anwendungsprozess (Avatar$_j$), der als ein Dienst für einen Nutzer (M$_j$) eines Kommunikationsnetzes (MN$_k$) durch die Betreiber des Netzes bereitgestellt wird, wobei der Anwendungsprozess (Avatar$_j$) mit

einem bestimmten Nutzer ($M_j$) verknüpft ist und für die Vorrichtung des Nutzers die computorisch und speichertechnisch aufwändigen Dienste der Überwachung, der Verarbeitung, der Datensicherung und der Datenübertragung ausführt; wobei diese Dienste unter Verwendung von Prozessor- und Speicherressourcen ausgeführt werden, die sich in einer Basisstation ($BS_k$) in dem Netz ($MN_k$) befinden, die dem momentanen Standort des Nutzers (Mj) am nächsten liegt; **dadurch gekennzeichnet, dass** der Anwendungsprozess ($Avatar_j$) dafür eingerichtet ist, diese Dienste weiterhin in einer Basisstation ($BS_1$) in einem anderen Mobilfunknetz ($MN_1$) bereitzustellen, wenn der Nutzer ($M_j$) in eine Region des anderen Netzes ($MN_1$) überwechselt, indem er den Standort nimmt, der dem momentanen Standort in dem anderen Mobilfunknetz ($MN_1$) am nächsten liegt, und den Nutzer ($M_j$) weiterhin in seinem Heimnetz ($MN_k$) repräsentiert, indem er eine Verbindung zu dem Heimnetz ($MN_k$) des Nutzers ($M_j$) eröffnet, um Nachrichten zu empfangen und Operationen im Namen des Nutzers ($M_j$) durchzuführen, oder Nachrichten, die an einen zweiten Nutzer ($M_i$) gesendet werden, umzurouten, wenn sich der Nutzer ($M_j$) aus seinem Heimnetz ($MN_k$) herausbewegt.

2. Anwendungsprozess ($Avatar_j$) nach Anspruch 1, wobei das Kommunikationsnetz unter Verwendung einer der folgenden Technologien arbeitet:

   a. Mobiltelefon;
   b. Internet;
   c. Intranet;
   d. Wi-Fi;
   e. Bluetooth;
   f. RFID; und
   g. leitungsgebunden.

3. Anwendungsprozess ($Avatar_j$) nach Anspruch 1, wobei das Kommunikationsnetz ($MN_k$) ein Mobilfunknetz ist und der Anwendungsprozess sich in der Mobilfunkbasisstation ($BS_k$) befindet, die dem momentanen Standort des Nutzers ($M_j$) am nächsten liegt.

4. Anwendungsprozess ($Avatar_j$) nach Anspruch 1, wobei die Kommunikation zwischen einem Gerät und seinem verknüpften Anwendungsprozess ($Avatar_j$) effizient und sicher auf der Grundlage von Codierungs- und Verschlüsselungstechniken ausgeführt wird.

5. Anwendungsprozess ($Avatar_j$) nach Anspruch 1, wobei die Kommunikation zwischen einer Vorrichtung und ihrem verknüpften Anwendungsprozess ($Avatar_j$) mittels eines dynamischen Regelwerkes ausgeführt wird, das von der mobilen Vorrichtung und ihrer verknüpften Anwendung ($Avatar_j$) gemeinsam genutzt wird.

6. Anwendungsprozess ($Avatar_j$) nach Anspruch 5, wobei die Regeln in dem dynamischen Regelwerk durch den Nutzer ($M_j$) definiert werden.

7. Anwendungsprozess ($Avatar_j$) nach Anspruch 5, wobei die Regeln in dem dynamischen Regelwerk davon abhängig sind, ob der Nutzer ($M_j$) online oder offline ist, so dass auch dann, wenn der Nutzer ($M_j$) nicht aktiv ist, seine Avatare ($Avatar_j$) in seinem Namen aktiv sind.

8. Anwendungsprozess ($Avatar_j$) nach Anspruch 1, wobei der Anwendungsprozess ($Avatar_j$) eines Nutzers ($M_j$) oder die Anwendungsprozesse ($Avatar_i$, $Avatar_j$) mehrerer Nutzer ($M_i$, $M_j$) dafür ausgelegt sind, ihre Aktionen automatisch und autonom zu koordinieren.

9. Anwendungsprozess ($Avatar_j$) nach Anspruch 1, wobei die Vorrichtung des Nutzers ($M_j$) nur ein Endgerät ist, das im Wesentlichen aus einer Tastatur und einem Bildschirm besteht, wobei die gesamte Verarbeitung durch den Anwendungsprozess ($Avatar_j$) ausgeführt wird, der Tastenanschläge von der Vorrichtung empfängt und die visuellen Informationen auf dem Bildschirm aktualisiert.

10. System, das eine Vorrichtung eines Kommunikationsnetznutzers ($M_j$) und einen oder mehrere zugehörige Anwendungsprozesse ($Avatar_j$) nach Anspruch 1 umfasst.

**Revendications**

1. Un procédé d'application ($Avatar_j$) fourni sous la forme d'un service à un utilisateur ($M_j$) d'un réseau de communication ($MN_k$) par les opérateurs du réseau, le procédé d'application ($Avatar_j$) est associé à un utilisateur spécifique ($M_j$) et exécute pour le dispositif d'utilisateur les services coûteux en calcul et espace mémoire de surveillance, de traitement, de sauvegarde et de transmission de données, dans lequel ces services sont exécutés au moyen de ressources de mémoire et de processeur installées au niveau d'une station de base ($BS_k$) dans le réseau ($MN_k$) le plus proche de l'emplacement actuel de l'utilisateur ($M_j$), **caractérisé en ce que** le procédé d'application ($Avatar_j$) est configuré de façon à poursuivre la fourniture de ces services au niveau d'une station de base ($BS_1$) dans un réseau mobile différent ($MN_1$) lorsque l'utilisateur ($M_j$) passe vers une zone du réseau différent ($MN_1$) par la prise de l'emplacement le plus proche de la position actuelle de l'utilisateur ($M_j$) dans le réseau mobile différent ($MN_1$) et conti-

nue à représenter l'utilisateur (M$_j$) dans son réseau d'accueil (MN$_k$) par l'ouverture d'une connexion au réseau d'accueil (MN$_k$) de l'utilisateur (M$_j$) de façon à recevoir des messages et exécuter des opérations au nom de l'utilisateur (M$_j$) ou à réacheminer des messages envoyés à un deuxième utilisateur (M$_i$) lorsque l'utilisateur (M$_j$) quitte son réseau d'accueil (MN$_k$).

2. Le procédé d'application (Avatar$_j$) selon la revendication 1, dans lequel le réseau de communication fonctionne au moyen de l'une des technologies suivantes:

    a. téléphone cellulaire,
    b. internet,
    c. intranet,
    d. Wi-Fi,
    e. Bluetooth,
    f. RFID, et
    g. câble.

3. Le procédé d'application (Avatar$_j$) selon la revendication 1, dans lequel le réseau de communication (MN$_k$) est un réseau cellulaire et le procédé d'application est installé au niveau de la station de base (BS$_k$) de réseau cellulaire la plus proche de l'emplacement actuel de l'utilisateur (M$_j$).

4. Le procédé d'application (Avatar$_j$) selon la revendication 1, dans lequel une communication entre un dispositif et son procédé d'application associé (Avatar$_j$) est exécutée de manière efficace et sécurisée en fonction de techniques de codage et de chiffrement.

5. Le procédé d'application (Avatar$_j$) selon la revendication 1, dans lequel une communication entre un dispositif et son procédé d'application associé (Avatar$_j$) est exécutée au moyen d'un dictionnaire dynamique de règles qui est partagé entre ledit dispositif mobile et son application associée (Avatar$_j$).

6. Le procédé d'application (Avatar$_j$) selon la revendication 5, dans lequel les règles dans le dictionnaire dynamique de règles sont définies par l'utilisateur (M$_j$).

7. Le procédé d'application (Avatar$_j$) selon la revendication 5, dans lequel les règles dans le dictionnaire dynamique de règles dépendent du fait que l'utilisateur (M$_j$) est en ligne ou hors ligne de sorte que, même lorsque l'utilisateur (M$_j$) est non actif, ses avatars (Avatar$_j$) sont actifs en son nom.

8. Le procédé d'application (Avatar$_j$) selon la revendication 1, dans lequel le procédé d'application (Avatar$_j$) d'un utilisateur (M$_j$) ou les procédés d'application (Avatar$_j$, Avatar$_j$) de plusieurs utilisateurs (M$_j$, M$_j$) sont adaptés de façon à coordonner leurs actions automatiquement et de manière autonome.

9. Le procédé d'application (Avatar$_j$) selon la revendication 1, dans lequel le dispositif d'utilisateur (M$_j$) est uniquement un terminal composé essentiellement d'un clavier et d'un écran d'affichage, dans lequel la totalité du traitement est effectué par ledit procédé d'application (Avatar$_j$) qui reçoit des frappes au clavier à partir dudit dispositif et actualise les informations visuelles sur ledit écran.

10. Un système comprenant un dispositif d'utilisateur (M$_j$) de réseau de communication et un ou plusieurs procédés d'application associés (Avatar$_j$) selon la revendication 1.

Fig. 1: *Avatar* process: Case 1

# Fig. 1

Fig. 2: *Avatar* process: Case 2

# Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 007947
- US 498294
- US 79368506
- US 558407
- US 457546
- US 355846
- US 926097
- US 347124
- US 20110277028 A
- US 20100072481 A

**Non-patent literature cited in the description**

- **E. RESCORLA.** SSL and TLS: Designing and Building Secure Systems. 2006, 65-178
- Zero-Knowledge Proofs of Identity. **U. FEIGE ; A. FIAT ; A. SHAMIR.** Journal of Cryptology. Springer, 1988, vol. 1, 77-94